(19) Europäisches Patentamt
European Patent Office
Office européen des brevets

(11) **EP 3 361 296 B1**

(12) **EUROPEAN PATENT SPECIFICATION**

(45) Date of publication and mention
of the grant of the patent:
**18.11.2020  Bulletin 2020/47**

(51) Int Cl.:
*G02B 6/02* (2006.01)          *H04B 10/25* (2013.01)
*H04J 14/00* (2006.01)

(21) Application number: **16853338.8**

(22) Date of filing: **25.08.2016**

(86) International application number:
**PCT/JP2016/074869**

(87) International publication number:
**WO 2017/061184 (13.04.2017 Gazette 2017/15)**

(54) **MULTICORE OPTICAL FIBER, MULTICORE OPTICAL FIBER CABLE, AND OPTICAL FIBER TRANSMISSION SYSTEM**

MEHRADRIGES GLASFASER, MEHRADRIGES GLASFASERKABEL UND GLASFASERÜBERTRAGUNGSSYSTEM

FIBRE OPTIQUE À ÂMES MULTIPLES, CÂBLE À FIBRE OPTIQUE À ÂMES MULTIPLES, ET SYSTÈME DE TRANSMISSION PAR FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2015  JP 2015199996**
**18.03.2016  JP 2016055424**

(43) Date of publication of application:
**15.08.2018  Bulletin 2018/33**

(73) Proprietor: **Sumitomo Electric Industries, Ltd.**
**Osaka-shi, Osaka 541-0041 (JP)**

(72) Inventor: **HAYASHI Tetsuya**
**Yokohama-shi**
**Kanagawa 244-8588 (JP)**

(74) Representative: **Hoffmann Eitle**
**Patent- und Rechtsanwälte PartmbB**
**Arabellastraße 30**
**81925 München (DE)**

(56) References cited:
**WO-A1-2013/161825     US-A1- 2013 003 962**
**US-A1- 2013 039 627**

• RYF R ET AL: "1705-km transmission over coupled-core fibre supporting 6 spatial modes", 2014 THE EUROPEAN CONFERENCE ON OPTICAL COMMUNICATION (ECOC), SYSTEMATIC PARIS REGION SYSTEMS AND ICT CLUSTER, 21 September 2014 (2014-09-21), pages 1-3, XP032689483, DOI: 10.1109/ECOC.2014.6964273 [retrieved on 2014-11-20]
• CRISTIAN ANTONELLI ET AL: "The delay spread in fibers for SDM transmission: dependence on fiber parameters and perturbations", OPTICS EXPRESS, vol. 23, no. 3, 28 January 2015 (2015-01-28), page 2196, XP055506795, DOI: 10.1364/OE.23.002196
• TETSUYA HAYASHI ET AL.: 'Coupled-Core Multi-Core Fibers: High-Spatial-Density Optical Transmission Fibers with Low Differential Modal Properties' ECOC 2015 27 September 2015, pages 1 - 3, XP032820263
• KEANG-PO HO ET AL.: 'Statistics of Group Delays in Multimode Fiber With Strong Mode Coupling' JOURNAL OF LIGHTWAVE TECHNOLOGY vol. 29, no. 21, 01 November 2011, pages 3119 - 3128, XP080551289
• MAHDIEH B.SHEMIRANI ET AL.: 'Principal Modes in Graded-Index Multimode Fiber in Presence of Spatial- and Polarization-Mode Coupling' JOURNAL OF LIGHTWAVE TECHNOLOGY vol. 27, no. 10, 15 May 2009, pages 1248 - 1261, XP011256765

- R.RYF ET AL.: '1705-km Transmission over Coupled-Core Fibre Supporting 6 Spatial Modes' ECOC 2014 21 September 2014, pages 1 - 3, XP032689483

- R.RYF ET AL.: 'Impulse Response Analysis of Coupled-Core 3-Core Fibers' ECOC 2012 16 September 2012, pages 1 - 3, XP032543822

## Description

### Technical Field

The present invention relates to a multi-core optical fiber (hereinafter, referred to as the "MCF"), an MCF cable, and an optical fiber transmission system including the MCF or the MCF cable.

### Background Art

Recently, an optical fiber transmission system that compensates for crosstalk between spatial modes using multi-input and multi-output (MIMO) signal processing technology and performs space-division multiplex transmission is developed. As an example of transmission media applicable to the optical fiber transmission system, an MCF with a coupled-core group in which a plurality of cores are arranged such that mode coupling is generated is known. The coupled-core group can be regarded as one multi-mode transmission path substantially by generating the mode coupling between the plurality of cores. Non-Patent Documents 3 and 4 cited below disclose such optical fiber transmission systems of the prior art.

### Citation List

### Non-Patent Literatures

[Non-Patent Document 1]: S. Fan and J. M. Kahn, "Principal modes in multimode waveguides", Opt. Lett. 30(2), 135-137 (2005)
[Non-Patent Document 2]: M. Koshiba, K. Saitoh, K. Takenaga, and S. Matsuo, "Analytical expression of average power-coupling coefficients for estimating intercore crosstalk in multicore fibers", IEEE Photon. J. 4(5), 1987-1995 (2012)
[Non-Patent Document 3]: T. Hayashi, T. Sasaki, E. Sasaoka, K. Saitoh, and M. Koshiba, "Physical interpretation of intercore crosstalk in multicore fiber: effects of macrobend, structure fluctuation, and microbend", Opt. Express 21(5), 5401-5412 (2013)
[Non-Patent Document 4]: RYF R ET AL: "1705-km transmission over coupled-core fibre supporting 6 spatial modes", 2014 THE EUROPEAN CONFERENCE ON OPTICAL COMMUNICATION (ECOC), SYSTEMATIC PARIS REGION SYSTEMS AND ICT CLUSTER, XP032689483, DOI: 10.1109/ ECOC.2014.6964273, 21 September 2014, pages 1-3.
[Non-Patent Document 5]: Cristian Antonelli ET AL: "The delay spread in fibers for SDM transmission: dependence on fiber parameters and perturbations", Optics Express, vol. 23, no. 3, 28 January 2015, pages 2196-2202, XP055506795, DOI: 10.1364/OE.23.002196 2.

### Summary of Invention

### Technical Problem

The inventors have found the following problems as an examination result of the MCF with the coupled-core group applicable to the optical fiber transmission system according to the related art. That is, in the case of spatial multiplex transmission using the optical fiber transmission system according to the related art, it is necessary to reduce a differential group delay (DGD) between the spatial modes to suppress a load increase of the MIMO signal processing. As far as the inventors know, when a core interval between adjacent cores in the coupled-core group decreases in the MCF in which random mode coupling is generated, the DGD between the spatial modes also decreases. However, it has not known that the DGD between the spatial modes increases when the core interval excessively decreases.
In other words, it has not known that linearity of the core interval and the DGD between the spatial modes is impaired when a degree of the mode coupling between the cores constituting the coupled-core group excessively increases. That is, it is thought that an accumulation of the DGD between the spatial modes becomes gentle, because a lot of random mode coupling is generated discretely along a fiber longitudinal direction, due to fiber bending and fiber torsion, in the coupled-core group in which an appropriate core interval is set. Meanwhile, it is thought that, when the core interval extremely decreases, perturbation applied from the fiber bending and the fiber torsion to coupling between the cores becomes smaller than the strength of the mode coupling between the cores and finally, the random mode coupling becomes hard to be generated and the accumulation of the DGD between the spatial modes increases.

The present invention has been made to resolve the above problems and an object of the present invention is to provide an MCF in which the strength of mode coupling or power coupling between adjacent cores in a coupled-core group included in the MCF is set to an appropriate level to reduce a DGD between spatial modes, an MCF cable, and an optical fiber transmission system including the MCF or the MCF cable.

**Solution to Problem**

An MCF according to the present invention, a multi-core optical fiber cable with the features of claim 1 is provided. Further preferred embodiments are mentioned in the dependent claims.

**Advantageous Effect of Invention**

According to the present embodiment, an MCF in which the strength of mode coupling or power coupling between adjacent cores included in one coupled-core group is set to an appropriate level to reduce a DGD between spatial modes is obtained.

**Brief Description of Drawings**

Fig. 1 is a diagram illustrating a schematic configuration of an optical fiber transmission system according to an embodiment;
Fig. 2A is a diagram illustrating a cross-sectional structure of an MCF applicable to the optical fiber transmission system according to the present embodiment;
Fig. 2B is a diagram illustrating a cross-sectional structure of an MCF cable applicable to the optical fiber transmission system according to the present embodiment;
Fig. 3 is a table illustrating various types of refractive index profiles applicable to a region including a core and a part of a cladding around the core;
Fig. 4A is a graph illustrating an evaluation result of a 20 dB full width of an impulse response and a mode coupling coefficient;
Fig. 4B is a graph illustrating an evaluation result of a 20 dB full width of an impulse response and a power coupling coefficient;
Fig. 5A is a graph illustrating a relation of a parameter b of an expression (1) and DGD/a; and
Fig. 5B is a graph illustrating a relation of the parameter b of the expression (1) and $\kappa/(\beta\Lambda C)$.

**Description of Embodiments**

[Description of embodiment of present invention]

First, contents of an embodiment of the present invention will be individually described.
A multi-core optical fiber (MCF) according to the present embodiment comprises: at least one coupled-core group constituted by a plurality of cores; and a common cladding surrounding the coupled-core group. Particularly, as one aspect of the present embodiment, a core interval A between adjacent cores among the plurality of cores constituting the coupled-core group is set such that a mode coupling coefficient between the adjacent cores at a wavelength of 1550 nm is $2.6 \times 10^0$ [m$^{-1}$] to $1.6 \times 10^2$ [m$^{-1}$] or a power coupling coefficient between the adjacent cores at the wavelength of 1550 nm is $1.3 \times 10^{-3}$ [m$^{-1}$] to $8.1 \times 10^0$ [m$^{-1}$].
As one aspect of the present embodiment, the core interval $\Lambda$ between the adjacent cores may be set such that the mode coupling coefficient between the adjacent cores at the wavelength of 1550 nm is $2.1 \times 10^1$ [m$^{-1}$] to $5.7 \times 10^1$ [m$^{-1}$] or the power coupling coefficient between the adjacent cores at the wavelength of 1550 nm is $1.0 \times 10^{-1}$ [m$^{-1}$] to $9.0 \times 10^{-1}$ [m$^{-1}$].
As one aspect of the present embodiment, the MCF preferably has a configuration to realize a low spatial mode dispersion (defined by a standard deviation of an autocorrelation function of an impulse response) in consideration of a fiber bending curvature at the time of cable formation. Specifically, as viewed macroscopically, fine fiber bending (microbending) and perturbation occur even when the MCF is set in a linear state (a fiber bending curvature is macroscopically zero). A virtual curvature $C_f$ [m$^{-1}$] of the MCT is a fiber bending curvature virtually represented by replacing the effect of these microbending and perturbation with the adding of a macroscopic fiber bending, and where the virtual curvature $C_f$ [m$^{-1}$] of the MCF in a linear state is defined by $C_f = C_{bend} \cdot h_b/h_s$ ($h_b$ shows a power coupling coefficient between cores in a state in which an optical fiber is bent at a curvature $C_{bend}$ of 5 [m$^{-1}$] or more and $h_s$ shows a power coupling coefficient between the cores in a state in which the optical fiber is held straight at a curvature of 0.1 [m$^{-1}$] or less), a mode coupling coefficient between the adjacent cores among the plurality of cores constituting the coupled-core group is denoted by $\kappa$ [m$^{-1}$], an average value of a propagation constant of the adjacent cores in the coupled-core group is denoted by $\beta$ [m$^{-1}$], and a core center interval between the adjacent cores in the coupled-core group is denoted by A [m], the MCF preferably has a core structure and a core arrangement satisfying the following first to third conditions. The first condition is defined by setting the core interval $\Lambda$ between the adjacent cores in the coupled-core group, such that the mode coupling coefficient $\kappa$ between the adjacent cores at a wavelength of 1550 nm is $1.6 \times 10^2$ [m$^{-1}$] or less. In addition, the second condition is defined by setting $\kappa/(\beta\Lambda C_f)$ to become 0.1 or less in a wavelength range of 1530 to 1625 nm. In addition, the third condition is defined by setting $\kappa$ to become $2.6 \times 10^0$ [m$^{-1}$] or more, or setting $\kappa/(\beta\Lambda C_f)$ to become 0.01 or more in the wavelength range of 1530 to 1625 nm. Although not an essential requirement of this aspect, in addition to the definitions of the parameters described above, when an average value of the curvature of the MCF in a state in which the MCF is embedded in a cable, along a longitudinal direction of the MCF, is denoted by $C_{avg}$ [m$^{-1}$], the second condition may be defined by setting $\kappa/(\beta\Lambda C_{avg})$ to become 0.1 or less in the wavelength range of 1530 to 1625 nm, in the case in which $C_{avg}$ is set to 0.01 to 2 [m$^{-1}$] or 0.1 to 1 [m$^{-1}$]. In addition, the third condition may be defined by setting $\kappa$ to become $2.6 \times 10^0$ [m$^{-1}$] or more and setting $\kappa/(\beta\Lambda C_{avg})$ to become 0.01 or more in the wavelength range of 1530 to 1625 nm.

As one aspect of the present embodiment, preferable characteristics of a coupling-type MCF for long distance transmission are described below. A transmission loss in full mode launch is preferably 0.20 dB/km or less, 0.18 dB/km or less, 0.16 dB/km or less, or 0.15 dB/km or less, in a wavelength range 1530 nm to 1565 nm or a wavelength range of 1460 nm to 1625 nm. A mode average of a chromatic dispersion is preferably 16 ps/(nm·km) or more. In all of spatial modes, a bending loss when the MCF is wound on a mandrel having a diameter of 30 mm by one turn is preferably 0.2 dB or less at a wavelength of 1550 nm. In all of spatial modes, a bending loss when the MCF is wound on a mandrel having a diameter of 20 mm is preferably 20 dB/m or less at the wavelength of 1550 nm. In all of spatial modes, a bending loss when the MCF is wound on a mandrel having a radius of 30 mm by 100 turns is preferably 0.5 dB or less at the wavelength of 1550 nm. In the wavelength range of 1530 nm to 1565 nm or the wavelength range of 1460 nm to 1625 nm, an average value of a mode dependent loss is preferably 0.01 dB/km$^{1/2}$ or less. In the wavelength range of 1530 nm to 1565 nm or the wavelength range of 1460 nm to 1625 nm, an average value of maximum values for respective wavelengths of a DGD between spatial modes is preferably 10 ps/km$^{1/2}$ or less.

As one aspect of the present embodiment, the common cladding includes a common optical cladding that covers all of the plurality of cores constituting the coupled-core group and a physical cladding that covers a surrounding portion of the optical cladding. Particularly, as a preferable core structure to realize the characteristics described above, an outer diameter of each of the plurality of cores is preferably 6 to 15 $\mu$m. When a relative refractive index difference based on a refractive index of pure silica is denoted by $\Delta$ in a cross-section of the MCF orthogonal to the longitudinal direction, a difference of $\Delta$ of an average area of each of the plurality of cores and $\Delta$ of the optical cladding is preferably about 0.2 to 0.5%, $\Delta$ of the physical cladding is preferably higher than $\Delta$ of the optical cladding, and a difference of $\Delta$ of the physical cladding and $\Delta$ of the optical cladding is preferably 0.0 to 1%.

As one aspect of the present embodiment, a preferable structure of an MCF having a cladding of 125 $\mu$m is described below. That is, the coupled-core group is preferably constituted by 2 to 7 cores or 8 to 15 cores. An outer diameter of the physical cladding is preferably 125 $\pm$ 1 $\mu$m. Where a shortest distance of the physical cladding and a center of a proximity core closest to the physical cladding is denoted by $D_J$, a radius of the proximity core is denoted by a, a distance of a center of the optical cladding and the center of the proximity core is denoted by $D_{offset}$, and $\log_{10}(D_{offset}/a)$ is denoted by X, the MCF satisfies an expression:

$$D_J/a \geq 7.68 \times 10^{-2} \cdot X^2 - 2.21 \times 10^{-1} \cdot X + 3.15;$$

or

$$D_J/a \geq 7.57 \times 10^{-2} \cdot X^2 - 2.25 \times 10^{-1} \cdot X + 3.40.$$

A multi-core optical fiber cable (MCF cable) according to the present embodiment has a structure to reduce a spatial mode dispersion and generates random spatial mode coupling by controlling fiber bending, a core structure, and a core pitch. As a result, a core number per fiber unit cross-sectional area can be increased while an accumulation of a DGD between spatial modes is reduced. Specifically, the MCF cable has a plurality of MCFs embedded therein. As one aspect of the present embodiment, each of the plurality of MCFs comprises: at least one coupled-core group constituted by a plurality of cores; and a common cladding surrounding the coupled-core group. Where an average value of a curvature of the MCF in a state in which the MCF is embedded in the MCF cable, along a longitudinal direction of the MCF, is denoted by $C_{avg}$ [m$^{-1}$], a virtual curvature of the MCF in a linear state is denoted by $C_f$ [m$^{-1}$], a mode coupling coefficient between adjacent cores among the plurality of cores constituting the coupled-core group is denoted by $\kappa$ [m$^{-1}$], an average value of propagation constants of the adjacent cores in the coupled-core group is denoted by $\beta$ [m$^{-1}$], and a core center interval between the adjacent cores in the coupled-core group is denoted by A [m], the MCF preferably has a core structure and a core arrangement satisfying the following first to third conditions. The first condition is defined by setting the core interval A between the adjacent cores in the coupled-core group , such that the mode coupling coefficient $\kappa$ between the adjacent cores at a wavelength of 1550 nm is $1.6 \times 10^2$ [m$^{-1}$] or less. The second condition is defined by setting $\kappa/(\beta \Lambda C_{avg})$ or $\kappa/(\beta \Lambda C_f)$ to become 0.1 or less in a wavelength range of 1530 to 1625 nm. The third condition is defined by setting $\kappa$ to become $2.6 \times 10^0$ [m$^{-1}$] or more, or setting $\kappa/(\beta \Lambda C_{avg})$ or $\kappa/(\beta \Lambda C_f)$ to become 0.01 or more in the wavelength range of 1530 to 1625 nm.

As one aspect of the present embodiment, to further increase the core number per fiber unit cross-sectional area while reducing the accumulation of the DGD between the spatial modes, the core structure and the core arrangement in each of the plurality of MCFs embedded in the MCF cable are preferably adjusted such that $\kappa/(\beta \Lambda C_{avg})$ or $\kappa/(\beta \Lambda C_f)$ becomes 0.01 or more in the wavelength range of 1530 to 1625 nm.

As one aspect of the present embodiment, to realize the above characteristics when a fiber curvature in a cable suitable for long distance transmission is assumed, $C_{avg}$ is preferably 0.01 to 2 [m$^{-1}$], in a state in which bending is not applied to the MCF cable. From the same reason, as one aspect of the present embodiment, $C_{avg}$ is preferably 0.1 [m$^{-1}$] or more, 1 [m$^{-1}$] or less, or 0.1 [m$^{-1}$] to 1 [m$^{-1}$], in a state in which bending is not applied to the MCF cable.

As one aspect of the present embodiment, preferable characteristics of a coupling-type MCF applicable to the MCF cable for the long distance transmission are described below. That is, in each of the plurality of MCFs embedded in the MCF cable, a transmission loss in full mode launch is preferably 0.20 dB/km or less, 0.18 dB/km or less, 0.16 dB/km or less, or 0.15 dB/km or less, in the wavelength range of 1530 nm to 1565 nm or the wavelength range of 1460 nm to 1625 nm. A mode average of a chromatic dispersion is preferably 16 ps/(nm·km) or more. In all of spatial modes, a bending loss when the MCF is wound on a mandrel having a diameter of 30 mm by one turn is preferably 0.2 dB or less at a wavelength of 1550 nm. In all of spatial modes, a bending loss when the MCF is wound on a mandrel having a diameter of 20 mm is preferably 20 dB/m or less at the wavelength of 1550 nm. In all of spatial modes, a bending loss when the MCF is wound on a mandrel having a radius of 30 mm by 100 turns is preferably 0.5 dB or less at the wavelength of 1550 nm. In the wavelength range of 1530 nm to 1565 nm or the wavelength range of 1460 nm to 1625 nm, an average value of a mode dependent loss is preferably 0.01 dB/km$^{1/2}$ or less. In the wavelength range of 1530 nm to 1565 nm or the wavelength range of 1460 nm to 1625 nm, an average value of a spatial mode dispersion is preferably 10 ps/km$^{1/2}$ or less.

As one aspect of an optical fiber transmission system according to the present embodiment, the MCFs or the MCF cables according to the various aspects may be applied as a transmission path. In this case, the optical fiber transmission system preferably includes a structure to compensate by MIMO signal processing for crosstalk between the spatial modes generated in the coupled-core group.

Each aspect listed in a column of "Description of embodiment of present invention" described above can be applied to each of the remaining aspects or all combinations of the remaining aspects.

[Details of embodiment of present invention]

Hereinafter, specific examples of an MCF, an MCF cable, and an optical fiber transmission system according to the present invention will be described in detail with reference to the accompanying drawings. However, the present invention is not limited to the examples and all changes in the accompanying claims and their equivalents are included in the present invention.

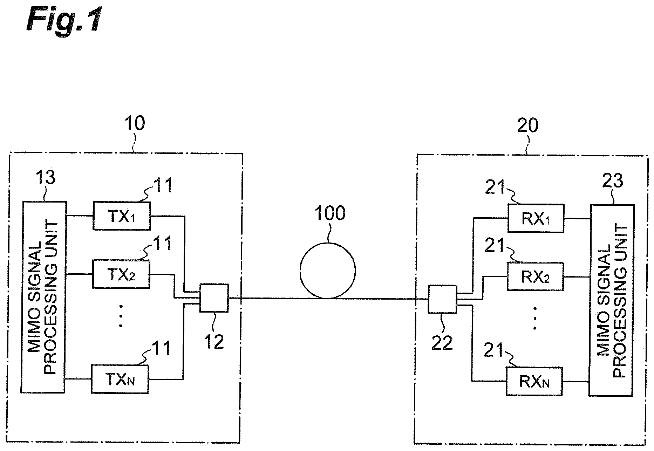

Fig. 1 is a diagram illustrating a schematic configuration of an optical fiber transmission system according to the present embodiment. An optical fiber transmission system 1 illustrated in Fig. 1 includes an MCF 100 according to the present embodiment that is applied as a transmission path, a transmission station 10 that is disposed on one end side of the MCF 100, and a reception station 20 that is disposed on the other end side of the MCF 100. The MCF 100 is an MCF that includes at least one coupled-core group constituted by a plurality of cores mode-coupled to each other. A plurality of transmitters 11 (TX$_1$ to TX$_N$) and a connector component (fan-in·fan-out·device: FI/FO) 12 to guide optical signals from the plurality of transmitters 11 to each core of the MCF 100 are provided in the transmission station 10. In addition, a plurality of receivers 21 (RX$_1$ to RX$_N$) and a connector component (FI/FO) 22 to distribute individual propagation spatial modes of the MCF 100 to the corresponding receivers 21 are provided in the reception station 20. In addition, in the optical fiber transmission system 1, as a structure to compensate for crosstalk between the spatial modes generated in the coupled-core group of the MCF 100 by MIMO signal processing, a MIMO signal processing unit 13 to control each of the transmitters 11 is disposed in the transmission station 10 and a MIMO signal processing unit 23 to control each of the receivers 21 is disposed in the reception station 20.

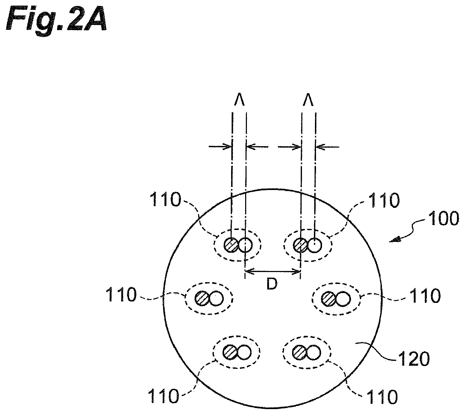

Fig. 2A illustrates a specific cross-sectional structure of the MCF 100. A cross-sectional view illustrated in Fig. 2A illustrates a cross section orthogonal to a longitudinal direction of the MCF 100. The MCF 100 includes coupled-core groups 110 and a common cladding 120 surrounding the coupled-core groups 110. The common cladding 120 includes an optical cladding covering all of a plurality of cores constituting each of the coupled-core groups 110 and a physical cladding covering the optical cladding. That is, in the cross-section of the MCF 100 illustrated in Fig. 2A, each region surrounded with a broken line is the optical cladding and a region outside each region surrounded with the broken line is the physical cladding.

Each coupled-core group 110 includes a plurality of cores in which adjacent cores are disposed at a predetermined core interval A and are mode-coupled to each other. The core interval $\Lambda$ is defined by an inter-center distance of the adjacent cores in each coupled-core group 110. In addition, the number of coupled-core groups 110 may be one or plural. When the number of coupled-core groups 110 is plural, the coupled-core groups 110 are separated from each other by a sufficient distance D to enter a non-coupling state (low crosstalk).

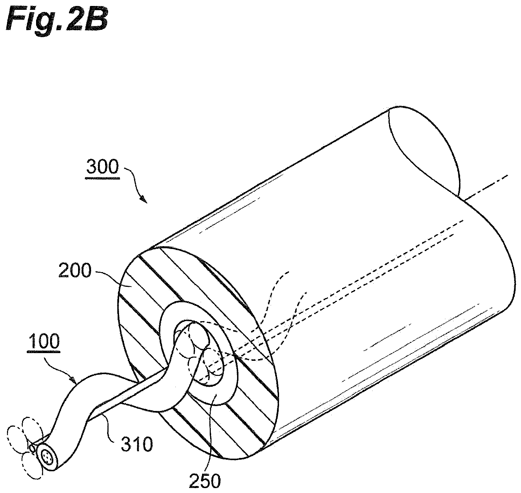

In addition, an MCF cable 300 in which a plurality of MCFs 100 having the structure described above are embedded may be laid between the transmission station 10 and the reception station 20. Fig. 2B is a diagram illustrating a configuration example of an MCF cable according to the present embodiment. As illustrated in Fig. 2B, the MCF cable 300 includes a support member 310, a plurality of MCFs 100 twisted in a spiral shape with the support member 310 as a center axis and wound on the support member 310 at a predetermined pitch, a strength member 250 wound on the plurality of MCFs 100 to hold a wound state, and a cable jacket 200 covering a surrounding portion of the strength member 250. In an example illustrated in Fig. 2B, the MCF cable 300 holds the four MCFs 100.

Even when the cable is held straight, each of the plurality of MCFs 100 is wound on the support member 310 at the predetermined pitch along a longitudinal direction thereof, so that bending of a constant curvature radius CR is applied. The cable jacket 200 covers the strength member 250 completely to protect the MCF 100 from external force. The strength member 250 may be an aramid fiber ("Kevlar (registered trademark)" manufactured by DU PONT-TORAY CO., LTD. or "Technora (registered trademark)" manufactured by TEIJIN LIMITED), for example. By providing the strength member 250, extension and strain are hard to be applied to the MCF 100 when the MCF cable 300 is pulled and the MCF 100 can be protected from an external shock by a cushion effect.

The support member 310 may be a metal material such as a tension member and may be a contraction resisting material resisting contraction of the cable jacket 200. In an example of Fig. 2B, only one MCF 100 is illustrated for simplification. However, in actuality, all MCFs 100 included in the MCF cable 300 are wound on the support member 310.

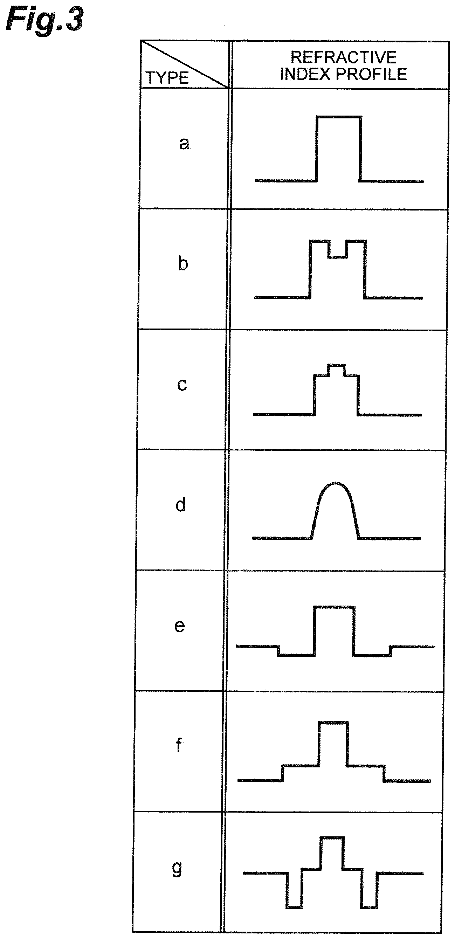

For a refractive index profile of each core or an optical characteristic according to the refractive index profile, an appropriate structure can be selected according to a use. However, structures of the individual cores may be the same and may be different. In addition, the number of cores in the cross-section of the MCF 100 is not limited and a cross-section diameter (glass diameter) of the MCF 100 and an external diameter of a coating resin provided on an outer circumferential surface of the common cladding can be appropriately set according to the number of cores embedded in the MCF 100. In a table of Fig. 3, various types of refractive index profiles applicable to a region including a core and a part of the cladding around the core are listed.

Specifically, a profile shape represented by (shape of refractive index profile of each core)/(shape of refractive index profile of optical cladding covering each core) is applicable to all of a step/matched type (type a), a tip recess step/matched type (type b), a tip protrusion step/matched type (type c), a graded/matched type (type d), a step/depressed type (type e), a dual step/matched type (type f), and a step/trench type (type g) and the refractive index profiles of the core and the cladding can be arbitrarily combined. In addition, each core may have a structure premised on a single mode operation in which the number of propagation modes of the core is one and may have a structure premised on a multi-mode operation of a plurality of propagation modes. However, when each core has the structure premised on the multi-mode operation, a power coupling coefficient between LP01s (fundamental modes) in the cores constituting each coupled-core group 110 is set to a power coupling coefficient between the adjacent cores.

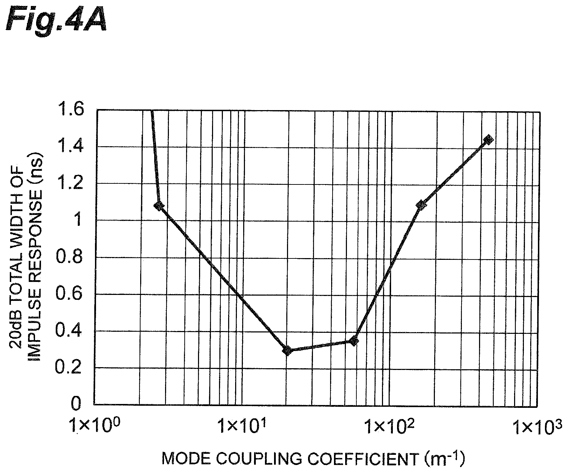

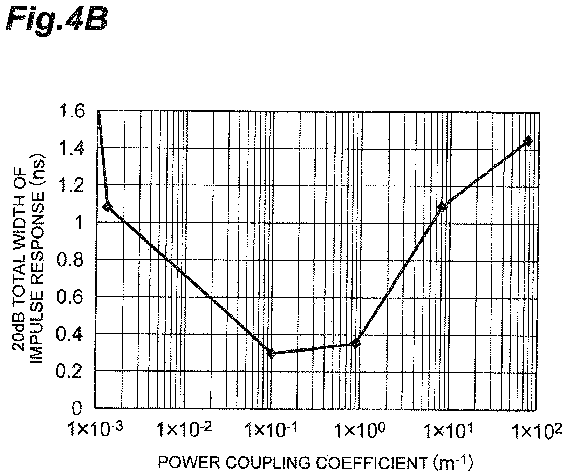

Figs. 4A and 4B are graphs illustrating evaluation results of a 20 dB full width of an impulse response and a mode coupling coefficient and a power coupling coefficient, for a plurality of samples prepared as the coupled-core groups of the MCF 100 according to the present embodiment. Particularly, Fig. 4A is a graph illustrating a relation of the 20 dB full width [ns] (pulse total time width smaller by 20 dB than a maximum value) of the impulse response and the mode coupling coefficient [m$^{-1}$] and Fig. 4B is a graph illustrating a relation of the 20 dB full width [ns] of the impulse response and the power coupling coefficient [m$^{-1}$].

Each of prepared samples 1 to 6 is an MCF having the six coupled-core groups 110 and each coupled-core group 110 is constituted by two cores. In addition, a relative refractive index difference $\Delta$ of each core based on the common cladding 120 is 0.41% and a core diameter of each core is 9.0 $\mu$m. A core interval $\Lambda$ in the sample 1 is 12.5 $\mu$m, a core interval $\Lambda$ in the sample 2 is 15.0 $\mu$m, a core interval $\Lambda$ in the sample 3 is 17.5 $\mu$m, a core interval $\Lambda$ in the sample 4 is 20.0 $\mu$m, a core interval $\Lambda$ in the sample 5 is 25.0 $\mu$m, and a core interval A in the sample 6 is 27.5 $\mu$m. In all of the samples 1 to 6, the six coupled-core groups 110 are separated from each other by a sufficient distance D to enter a non-coupling state.

In addition, in the samples 1 to 6, a fiber length is set to 66 m and the 20 dB full width of the impulse response at the wavelength of 1550 nm between the cores in each coupled-core group 110 is evaluated using optical frequency domain reflectometry (OFDR). In the OFDR, light is incident from one end of each of the samples 1 to 6 wound on a bobbin having a radius of 140 mm and a peak of Fresnel reflection at the other end is measured.

A calculation value of the mode coupling coefficient at the wavelength of 1550 nm between the cores in the coupled-core group 110 of each of the samples 1 to 6 having the structure described above is $4.5 \times 10^2$ [m$^{-1}$] in the coupled-core group 110 of the sample 1 ($\Lambda$ = 12.5 $\mu$m), is $1.6 \times 10^2$ [m$^{-1}$] in the coupled-core group 110 of the sample 2 ($\Lambda$ = 15.0 $\mu$m), is $5.7 \times 10^1$ [m$^{-1}$] in the coupled-core group 110 of the sample 3 ($\Lambda$ = 17.5 $\mu$m), is $2.1 \times 10^1$ [m$^{-1}$] in the coupled-core group 110 of the sample 4 ($\Lambda$ = 20.0 $\mu$m), is $2.6 \times 10^0$ [m$^{-1}$] in the coupled-core group 110 of the sample 5 ($\Lambda$ = 25.0 $\mu$m), and is $9.4 \times 10^{-1}$ [m$^{-1}$] in the coupled-core group 110 of the sample 6 ($\Lambda$ = 27.5 $\mu$m).

In addition, a calculation value of the power coupling coefficient at the wavelength of 1550 nm between the cores in the coupled-core group 110 of each of the samples 1 to 6 is $7.6 \times 10^1$ [m$^{-1}$] in the coupled-core group 110 of the sample 1 ($\Lambda$ = 12.5 $\mu$m), is $8.1 \times 10^0$ [m$^{-1}$] in the coupled-core group 110 of the sample 2 ($\Lambda$ = 15.0 $\mu$m), is $9.0 \times 10^{-1}$ [m$^{-1}$] in the coupled-core group 110 of the sample 3 ($\Lambda$ = 17.5 $\mu$m), is $1.0 \times 10^{-1}$ [m$^{-1}$] in the coupled-core group 110 of the sample 4 ($\Lambda$ = 20.0 $\mu$m), is $1.3 \times 10^{-3}$ [m$^{-1}$] in the coupled-core group 110 of the sample 5 (A = 25.0 $\mu$m), and is $1.5 \times 10^{-4}$ [m$^{-1}$] in the coupled-core group 110 of the sample 6 ($\Lambda$ = 27.5 $\mu$m).

From Figs. 4A and 4B, the 20 dB full width of the impulse response increases rapidly in the coupled-core group of the sample 6. To realize a value equal to or smaller than 1.1 ns to be the same 20 dB full width of the impulse response as the coupled-core group of the sample 5 in which the rapid increase in the 20 dB full width of the impulse response does not occur, the mode coupling coefficient is preferably $2.6 \times 10^0$ [m$^{-1}$] to $1.6 \times 10^2$ [m$^{-1}$] and the power coupling coefficient is preferably $1.3 \times 10^{-3}$ [m$^{-1}$] to $8.1 \times 10^0$ [m$^{-1}$]. In addition, to cause the 20 dB full width of the impulse response to become a value equal to or smaller than 0.4 ns of a lowest level, the mode coupling coefficient is more preferably $2.1 \times 10^1$ [m$^{-1}$] to $5.7 \times 10^1$ [m$^{-1}$] and the power coupling coefficient is more preferably $1.0 \times 10^{-1}$ [m$^{-1}$] to $9.0 \times 10^{-1}$ [m$^{-1}$]. Therefore, in the MCF 100 according to the present embodiment, the core interval A in each coupled-core group 110 is preferably set to satisfy the above range of the mode coupling coefficient or the power coupling coefficient.

Appropriate bending is preferably applied to the MCF 100 according to the present embodiment. In addition, twisting with a center of the common cladding 120 (a center in a cross-section of the common cladding 120 orthogonal to the longitudinal direction of the MCF 100) as a rotation axis is preferably applied to the MCF 100 according to the present embodiment. The twisting may be applied in a state in which glass is melted during drawing of the optical fiber and may be applied in a state in which the glass is hardened after drawing the optical fiber.

Next, reduction of an accumulation of a DGD between the spatial modes is examined. It can be thought that, when a fiber length of the MCF is set to L and a is set to a proportional constant, the DGD between the spatial modes increases according to the following expression (1), with respect to the fiber length L.

$$\mathrm{DGD} = \mathrm{a}\mathrm{L}^{\mathrm{b}} \quad (1)$$

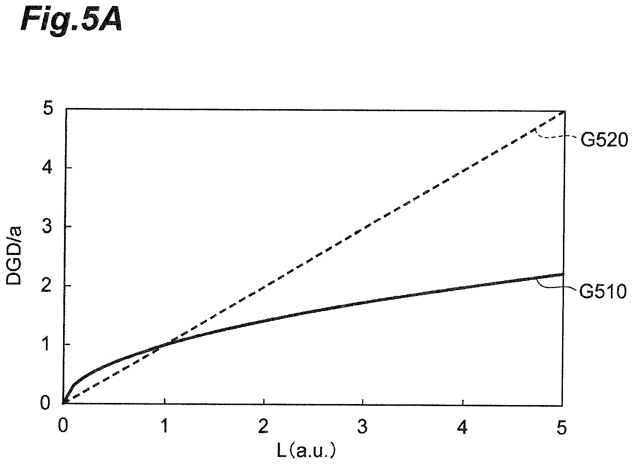

From an example of a polarization mode dispersion, it is known that b = 1 in which the DGD between the spatial modes becomes largest is obtained when random coupling is not generated between the spatial modes and an increase in the DGD between the spatial modes becomes gentle with respect to an increase in the fiber length L when sufficiently random coupling is generated between the spatial modes (b = 0.5). Fig. 5A is a diagram illustrating a relation of DGD/a and the fiber length L. In Fig. 5A, a graph G510 illustrates a relation at the time of b = 0.5 and a graph G520 illustrates a relation at the time of b = 1.

Here, the inventors have checked what value b has by random simulation calculation, when the proportional constant a is set to a DGD scaling factor and b is set to a DGD growth rate. A simulation has been performed using a mode coupling equation of the core mode. A mode coupling equation of two cores (that is, a total of two modes) can be represented by the following expression (2), on the assumption that the polarization mode degenerates, and can be ignored, for simplification.

$$\frac{\partial}{\partial z}\begin{bmatrix} E_1(\omega,z) \\ E_2(\omega,z) \end{bmatrix} = -j \begin{bmatrix} \beta_1(\omega)\left(1+\frac{\Lambda}{2}C(z)\cos\theta(z)\right) & \kappa(\omega) \\ \kappa(\omega) & \beta_2(\omega)\left(1-\frac{\Lambda}{2}C(z)\cos\theta(z)\right) \end{bmatrix}\begin{bmatrix} E_1(\omega,z) \\ E_2(\omega,z) \end{bmatrix} \quad (2)$$

Here, $\kappa$ shows a mode coupling coefficient between cores, $\beta$ shows a propagation constant of each core, A shows a core interval (a center interval between cores), C shows a curvature of a fiber (reciprocal of a bending radius), and θ shows a rotation angle of a fiber for a bending direction when taken for a certain standard. In addition, an index (subscript) of each parameter shows a core number. If the expression (2) is solved, a transfer equation of z = 0 to z = L like the following expression (3) can be acquired.

$$\begin{bmatrix} E_1(\omega, z = L) \\ E_2(\omega, z = L) \end{bmatrix} = \mathbf{T} \begin{bmatrix} E_1(\omega, z = 0) \\ E_2(\omega, z = 0) \end{bmatrix} \qquad (3)$$

Here, T shows a transfer matrix of core number (total mode number) × core number (total mode number). An eigenvalue of a group-delay operator matrix is acquired by transforming the transfer matrix T in a form of a group-delay operator described in the above-mentioned Non-Patent document 1 and the DGD between the spatial modes can be simulated by taking a difference of a maximum value and a minimum value thereof.

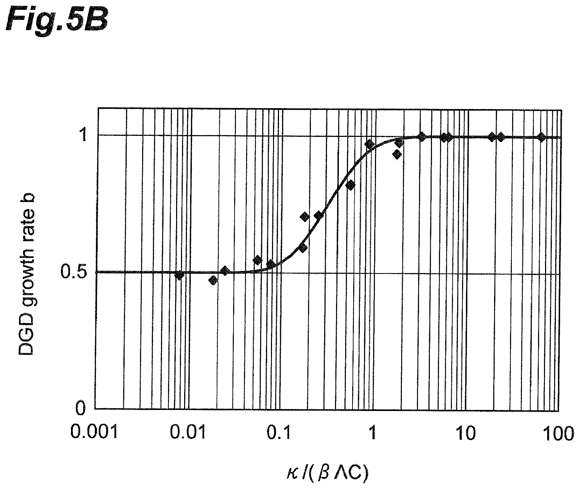

Fig. 5B illustrates a calculation result of change rates of A, C, and θ for z at a plurality of levels in the wavelength range of 1530 to 1625 nm by the above method. It can be thought that a mode coupling coefficient between the adjacent cores is $\kappa$, a propagation constant of each adjacent core is $\beta$ (here, it is assumed that the propagation constant is the same in two cores), and a core interval (center interval between the adjacent cores) is A. From the result of Fig. 5B, it is known that a DGD growth rate b shows clear dependency for $\kappa/(\beta AC)$. Here, $\kappa$ to be a numerator of $\kappa/(\beta AC)$ shows coupling of electric field amplitudes of the two adjacent cores as known from that $\kappa$ is included in non-diagonal elements of the above expression (2) and $(\beta AC)$ to be a denominator shows a maximum value of a difference of equivalent propagation constants affected by bending to be a diagonal element. When $\kappa/(\beta AC)$ is equal to or smaller than 0.1, b takes a value near 0.5, when $\kappa/(\beta AC)$ approaches from 0.1 to 1, b approaches to 1, and when $\kappa/(\beta AC)$ is equal to or larger than 1, b becomes 1. From this, to reduce the DGD between the spatial modes, it is necessary to adjust a core structure and a core arrangement to cause $\kappa/(\beta AC)$ to become equal to or smaller than 0.1. That is, to reduce the DGD between the spatial modes, $\kappa/(\beta AC)$ is preferably equal to or smaller than 0.1.

From the above result, when the propagation constant difference slightly changes along the longitudinal direction of the MCF or mode coupling between the cores is excessively strong ($\beta AC \ll \kappa$, that is, $\kappa/(\beta AC) \gg 1$)), for stable propagation of super modes in which the core modes are coupled, the super modes are not coupled and a DGD between the super modes accumulates at b = 1. Meanwhile, when the mode coupling coefficient between the cores is in an appropriate range and the propagation constant difference changes along the longitudinal direction of the MCF ($\beta AC$ to be a maximum value of the change is large, that is, $\kappa/(\beta AC)$ is small), random coupling between the spatial modes is generated, b approaches to 0.5, and an accumulation of the DGD between the spatial modes becomes gentle.

Therefore, when an average value of the curvature of the MCF in the cable along the fiber longitudinal direction of the MCF is set to $C_{avg}$ [m$^{-1}$], a mode coupling coefficient between the adjacent cores in the coupled-core group is set to $\kappa$ [m$^{-1}$], an average value of propagation constants between the adjacent cores in the coupled-core group is set to $\beta$ [m$^{-1}$], and a core center interval between the adjacent cores in the coupled-core group is set to A [m], the accumulation of the DGD between the spatial modes in the MCF cable can be reduced by embedding the MCF in which the core structure and the core arrangement are adjusted such that $\kappa/(\beta AC_{avg})$ becomes 0.1 or less in the wavelength range of 1530 to 1625 nm. When the core interval increases, $\kappa/(\beta AC_{avg})$ decreases. For this reason, when $\kappa/(\beta AC_{avg})$ decreases excessively, a core density decreases and core coupling becomes weak and mode coupling becomes very weak. In this case, sufficient random mode coupling necessary for reducing the DGD between the spatial modes is not generated. Therefore, $\kappa/(\beta AC_{avg})$ is preferably 0.01 or more. At this time, $C_{avg}$ may be an average value of curvatures applied to the MCF after sufficient control and may be an average value of curvatures including an unintentionally applied curvature.

Referring to the above-mentioned Non-Patent Document 2 and Non-Patent Document 3, it is thought that, even when the MCF is in a linear state (even when actual C is 0), a change of an inter-core propagation constant difference along the longitudinal direction of the MCF, which is substantially equal to that in the case in which C of 0.01 to 1 [m$^{-1}$] or 0.1 to 1 [m$^{-1}$] is applied, is generated by a change of a fiber structure along the longitudinal direction or microbend. The curvature C when the optical fiber is held straight can be estimated by a virtual curvature $C_f$ [m$^{-1}$] = $C_{bend} \cdot h_b/h_s$ ($h_b$ shows a power coupling coefficient between the cores in a state in which the optical fiber is bent at a curvature $C_{bend}$ of 5 [m$^{-1}$] or more and $h_s$ shows a power coupling coefficient between the cores in a state in which the optical fiber is held straight at a curvature of 0.1 [m$^{-1}$] or less and the accumulation of the DGD between the spatial modes in the MCF cable can be reduced by embedding the MCF in which the core structure and the core arrangement are adjusted such that $\kappa/(\beta AC_f)$ becomes 0.1 or less in the wavelength range of 1530 to 1625 nm. When the core interval increases, $\kappa/(\beta AC_f)$ decreases. For this reason, when $\kappa/(\beta AC_f)$ decreases excessively, a core density decreases and core coupling becomes weak and mode coupling becomes very weak. In this case, sufficient random mode coupling necessary for reducing the DGD between the spatial modes is not generated. Therefore, $\kappa/(\beta AC_f)$ is preferably 0.01 or more.

Hereinafter, samples of the MCF according to the present embodiment and a comparative example will be described in connection with a lower limit of $\kappa/(\beta AC_{avg})$.

Each of the samples trial-produced as the MCF according to the present embodiment includes 2 to 7 cores that have a ring-type refractive index profile, a common optical cladding that covers the cores, and a physical cladding that covers the optical cladding and has an outer diameter of 125 $\mu$m. An outer diameter of the cores is set to about 11.3 $\mu$m and when a relative refractive index difference based on a refractive index of pure silica is set to $\Delta$, a difference of $\Delta$ of an average area of the cores and $\Delta$ of the optical cladding is about 0.34%, $\Delta$ of the physical cladding is higher than $\Delta$ of the optical cladding, and a difference of $\Delta$ of the physical cladding and $\Delta$ of the optical cladding is 0.05 to 0.1%. When a shortest distance of the physical cladding and a center of a proximity core closest to the physical cladding is set to $D_J$, a radius of the proximity core is set to a, a distance of the proximity core and a center of the optical cladding is set to $D_{offset}$, and $X = \log_{10}(D_{offset}/a)$ is set, the MCF satisfies one of the following expressions:

$$D_J/a \geq 7.68 \times 10^{-2} \cdot X^2 - 2.21 \times 10^{-1} \cdot X + 3.15;$$

or

$$D_J/a \geq 7.57 \times 10^{-2} \cdot X^2 - 2.25 \times 10^{-1} \cdot X + 3.40.$$

In the samples of the MCF, about 6.1 ps/km$^{1/2}$ is obtained as a measurement result of a value of a spatial mode dispersion (root-mean-square of the DGD between the spatial modes) when $\kappa/(\beta\Delta C)$ is adjusted to become $2.7 \times 10^{-2}$.

Meanwhile, in the comparative example, about 32 ps/km$^{1/2}$ is obtained as a measurement result of a value of a spatial mode dispersion when $\kappa/(\beta\Delta C)$ is adjusted to become $2 \times 10^{-3}$ to $3 \times 10^{-3}$ and the value of the spatial mode dispersion becomes larger by almost five times than the value of the spatial mode dispersion in the samples of the MCF according to the present embodiment in which $\kappa/(\beta\Delta C)$ is 0.01 or more.

In the MCF according to the present embodiment, the core and the common cladding are preferably made of glass or silica glass. In addition, a surrounding portion of the common cladding may be covered with a protection material made of a resin, a metal, and carbon. A minute amount of alkali metal may be added to the glass of each core.

As a preferable characteristic to improve an optical signal to noise ratio at the time of long distance transmission, a transmission loss in full mode launch is preferably 0.20 dB/km or less, 0.18 dB/km or less, 0.16 dB/km or less, or 0.15 dB/km or less in the wavelength range of 1530 nm to 1565 nm or the wavelength range of 1460 nm to 1625 nm. A mode average of a chromatic dispersion is preferably 16 ps/(nm·km) or more. In all of spatial modes, a bending loss when the MCF is wound on a mandrel having a diameter of 30 mm by one turn is preferably 0.2 dB or less at a wavelength of 1550 nm. In all of spatial modes, a bending loss when the MCF is wound on a mandrel having a diameter of 20 mm is preferably 20 dB/m or less at the wavelength of 1550 nm. In all of spatial modes, a bending loss when the MCF is wound on a mandrel having a radius of 30 mm by 100 turns is preferably 0.5 dB or less at the wavelength of 1550 nm. In the wavelength range of 1530 nm to 1565 nm or the wavelength range of 1460 nm to 1625 nm, an average value of a mode dependent loss is preferably 0.01 dB/km$^{1/2}$ or less. In the wavelength range of 1530 nm to 1565 nm or the wavelength range of 1460 nm to 1625 nm, an average value of a maximum value of a DGD between spatial modes at each wavelength is preferably 10 ps/km$^{1/2}$ or less. For all MCF cable in which the plurality of MCFs having the characteristics described above are embedded, in the wavelength range of 1530 nm to 1565 nm or the wavelength range of 1460 nm to 1625 nm, an average value of a spatial mode dispersion is 10 ps/km$^{1/2}$ or less.

As a preferable characteristic of the MCF according to the present embodiment, under a situation where external stress is applied, an effective area of spatial modes localized in each core is preferably 60 $\mu$m$^2$ to 180 $\mu$m$^2$ in all of spatial modes to improve the optical signal to noise ratio at the time of the long distance transmission.

As a configuration to obtain the preferable characteristic, in the MCF according to the present embodiment, the common cladding preferably includes a common optical cladding that covers all of a plurality of cores constituting the coupled-core group and a physical cladding that covers a surrounding portion of the optical cladding. Particularly, as a preferable core structure to realize the above characteristic, an outer diameter of each of the plurality of cores is preferably 6 to 15 $\mu$m. In a cross-section of the MCF orthogonal to the longitudinal direction, when a relative refractive index difference based on a refractive index of pure silica is set to $\Delta$, a difference of $\Delta$ of an average area of each of the plurality of cores and $\Delta$ of the optical cladding is preferably about 0.2 to 0.5%, $\Delta$ of the physical cladding is preferably higher than $\Delta$ of the optical cladding, and a difference of $\Delta$ of the physical cladding and $\Delta$ of the optical cladding is preferably 0.0 to 1%, 0.0 to 0.5%, or 0.0 to 0.35%.

The MCF according to the present embodiment satisfying the core structure described above preferably has the following structure to increase the number of cores in the physical cladding having an outer diameter of 125 $\mu$m. That is, the coupled-core group is constituted by 2 to 7 cores or 8 to 15 cores. The outer diameter of the physical cladding is 125 $\pm$ 1 $\mu$m. To suppress a transmission loss from increasing due to an OH group of the physical cladding or an interface of the optical cladding and the physical cladding, where a shortest distance of the physical cladding and a center of a proximity core closest to the physical cladding is set to $D_J$, a radius of the proximity core is set to a, a distance of a center of the optical cladding and the center of the proximity core is set to $D_{offset}$, and $X = \log_{10}(D_{offset}/a)$ is set, it is preferable that the MCF satisfies one of the following expressions:

$$D_J/a \geq 7.68 \times 10^{-2} \cdot X^2 - 2.21 \times 10^{-1} \cdot X + 3.15;$$

or

$$D_J/a \geq 7.57 \times 10^{-2} \cdot X^2 - 2.25 \times 10^{-1} \cdot X + 3.40.$$

**Reference Signs List**

1 ... Optical fiber transmission system; 10 ... Transmission station; 11 ... Transmitter ($TX_1$ to $TX_N$); 12 ... Connector component; 20 ...Reception station; 21 ...Receiver ($RX_1$ to $RX_N$); 100 .. MCF (Multi-core optical fiber); 110 ... Coupled-core group; 120 ... Common cladding; and 300 ... MCF cable (Multi-core optical fiber cable).

**Claims**

1. A multi-core optical fiber (100) comprising:

   at least one coupled-core group (110) constituted by a plurality of cores; and
   a common cladding (120) surrounding the coupled-core group (110),
   wherein, where an average value of a curvature of the multi-core optical fiber in a state in which the multi-core optical fiber is embedded in a cable, along a longitudinal direction of the multi-core optical fiber, is denoted by $C_{avg}$ [m$^{-1}$], a virtual curvature of the multi-core optical fiber in a linear state is denoted by $C_f$ [m$^{-1}$], a mode coupling coefficient between adjacent cores among the plurality of cores constituting the coupled-core group is denoted by $\kappa$ [m$^{-1}$], an average value of propagation constants of the adjacent cores in the coupled-core group is denoted by $\beta$ [m$^{-1}$], and a core center interval between the adjacent cores in the coupled-core group (110) is denoted by A [m],
   the multi-core optical fiber has a core structure and a core arrangement satisfying following first to third conditions:

   the first condition defined such that the core interval A between the adjacent cores in the coupled-core group (110) is set such that the mode coupling coefficient $\kappa$ between the adjacent cores at a wavelength of 1550 nm is $1.6 \times 10^2$ [m$^{-1}$] or less;
   the second condition defined such that $\kappa/(\beta \Lambda C_{avg})$ or $\kappa/(\beta \Lambda C_f)$ becomes 0.1 or less in a wavelength range of 1530 to 1625 nm when $C_{avg}$ is set to 0.01 to 2 [m$^{-1}$] or 0.1 to 1 [m$^{-1}$]; and
   the third condition defined such that $\kappa$ becomes $2.6 \times 10^0$ [m$^{-1}$] or more, or, $\kappa/(\beta \Lambda C_{avg})$ or $\kappa/(\beta \Lambda C_f)$ becomes 0.01 or more in the wavelength range of 1530 to 1625 nm.

2. The multi-core optical fiber (100) according to claim 1, wherein
   a transmission loss in full mode launch is 0.20 dB/km or less in a wavelength range of 1530 nm to 1565 nm or a wavelength range of 1460 nm to 1625 nm, the mode average of a chromatic dispersion is 16 ps/(nm·km) or more,
   in all spatial modes, a bending loss when the multi-core optical fiber is wound on a mandrel having a diameter of 30 mm by one turn is 0.2 dB or less at a wavelength of 1550 nm,
   in all spatial modes, a bending loss when the multi-core optical fiber is wound on a mandrel having a diameter of 20 mm is 20 dB/m or less at the wavelength of 1550 nm,
   in all spatial modes, a bending loss when the multi-core optical fiber is wound on a mandrel having a radius of 30 mm by 100 turns is 0.5 dB or less at the wavelength of 1550 nm,
   in the wavelength range of 1530 nm to 1565 nm or the wavelength range of 1460 nm to 1625 nm, the average value of a mode dependent loss is 0.01 dB/km$^{1/2}$ or less, and
   in the wavelength range of 1530 nm to 1565 nm or the wavelength range of 1460 nm to 1625 nm, an average value of maximum values for respective wavelengths of ; the differential group delay between spatial modes is 10 ps/km$^{1/2}$ or less.

3. The multi-core optical fiber (100) according to claim 1 or 2, wherein
the common cladding (120) includes: a common optical cladding that covers all of the plurality of cores constituting the coupled-core group (110); and a physical cladding that covers a periphery of the optical cladding, the outer diameter of each of the plurality of cores is 6 to 15 $\mu$m, and
where a relative refractive index difference based on a refractive index of pure silica is denoted by $\Delta$ in a cross-section of the multi-core optical fiber orthogonal to the longitudinal direction, the difference of $\Delta$ of an average area of each of the plurality of cores and $\Delta$ of the optical cladding is 0.2% to 0.5%, $\Delta$ of the physical cladding is higher than $\Delta$ of the optical cladding, and a difference of $\Delta$ of the physical cladding and $\Delta$ of the optical cladding is 0.0% to 1%.

4. The multi-core optical fiber (100) according to claim 3, wherein
the coupled-core group (110) is constituted by 2 to 15 cores, the outer diameter of the physical cladding is 125 $\pm$ 1 $\mu$m, and
where ; the shortest distance of the physical cladding and the center of the proximity core closest to the physical cladding is denoted by $D_J$, the radius of the proximity core is denoted by 'a', the distance of the center of the optical cladding and the center of the proximity core is denoted by $D_{offset}$, and $\log_{10}(D_{offset}/a)$ is denoted by X,
the multi-core optical fiber satisfies one of the following expressions:

$$D_J/a \geq 7.68 \times 10^{-2} \cdot X^2 - 2.21 \times 10^{-1} \cdot X + 3.15;$$

or

$$D_J/a \geq 7.57 \times 10^{-2} \cdot X^2 - 2.25 \times 10^{-1} \cdot X + 3.40.$$

5. An optical fiber transmission system (1) in which the multi-core optical fiber according to any one of claims 1 to 4 is applied as a transmission path,
wherein the optical fiber transmission system (1) has a structure to compensate by MIMO signal processing for crosstalk between the spatial modes generated in the coupled-core group (110).

6. A multi-core optical fiber cable (300) in which a plurality of multi-core optical fibers (100) are embedded, each of the plurality of multi-core optical fibers (100) having the same structure as the multi-core optical fiber defined in claim 1, wherein:
each of the plurality of multi-core optical fibers has the core structure and the core arrangement satisfying a fourth condition defined such that $\kappa/(\beta\Lambda C_{avg})$ or $\kappa/(\beta\Lambda C_f)$ becomes 0.1 or less in a wavelength range of 1530 to 1625 nm.

7. The multi-core optical fiber cable according to claim 6, wherein
the core structure and the core arrangement in each of the plurality of multi-core optical fibers are adjusted such that $\kappa/(\beta\Lambda C_{avg})$ or $\kappa/(\beta\Lambda C_f)$ becomes 0.01 or more in the wavelength range of 1530 to 1625 nm.

8. The multi-core optical fiber cable according to claim 6 or 7, wherein
$C_{avg}$ is 0.01 to 2 [m$^{-1}$], in a state in which the multi-core optical fiber cable is not bent.

9. The multi-core optical fiber cable according to any one of claims 6 to 8, wherein
$C_{avg}$ is 0.1 [m$^{-1}$] to 1 [m$^{-1}$], in a state in which the multi-core optical fiber cable is not bent.

10. The multi-core optical fiber cable according to any one of claims 6 to 9, wherein
in each of the plurality of multi-core optical fibers, a transmission loss in full mode launch is 0.20 dB/km or less in a wavelength range of 1530 nm to 1565 nm or a wavelength range of 1460 nm to 1625 nm, the mode average of a chromatic dispersion is 16 ps/(nm·km) or more,
in all spatial modes, a bending loss when the multi-core optical fiber is wound on a mandrel having a diameter of 30 mm by one turn is 0.2 dB or less at a wavelength of 1550 nm,
in all spatial modes, a bending loss when the multi-core optical fiber is wound on a mandrel having a diameter of 20 mm is 20 dB/m or less at the wavelength of 1550 nm,
in all spatial modes, a bending loss when the multi-core optical fiber is wound on a mandrel having a radius of 30 mm by 100 turns is 0.5 dB or less at the wavelength of 1550 nm,
in the wavelength range of 1530 nm to 1565 nm or the wavelength range of 1460 nm to 1625 nm, the average value of a mode dependent loss is 0.01 dB/km$^{1/2}$ or less, and
in the wavelength range of 1530 nm to 1565 nm or the wavelength range of 1460 nm to 1625 nm, the average value of a spatial mode dispersion is 10 ps/km$^{1/2}$ or less.

11. An optical fiber transmission system (1) in which the multi-core optical fiber cable according to any one of claims 6 to 10 is applied as a transmission path,
wherein the optical fiber transmission system (1) has a structure to compensate by MIMO signal processing for crosstalk between the spatial modes generated in the coupled-core group (110).

## Patentansprüche

1. Mehradriger Lichtwellenleiter (100), umfassend:

mindestens eine Gruppe mit gekoppelten Adern (110), die aus einer Vielzahl von Adern gebildet ist; und
eine gemeinsame Ummantelung (120), die die Gruppe mit gekoppelten Adern (110) umgibt,
wobei, wo ein Durchschnittswert einer Krümmung des mehradrigen Lichtwellenleiters in einem Zustand, in dem der mehradrige Lichtwellenleiter in ein Kabel eingebettet ist, entlang einer Längsrichtung des mehradrigen Lichtwellenleiters mit $C_{avg}$ [m$^{-1}$] gekennzeichnet ist, eine virtuelle Krümmung des mehradrigen Lichtwellenleiters in einem linearen Zustand mit $C_f$ [m$^{-1}$] gekennzeichnet ist, ein Modenkopplungskoeffizient zwischen benachbarten Adern aus der Vielzahl von Adern, die die Gruppe mit gekoppelten Adern bilden, mit $\kappa$ [m$^{-1}$] gekennzeichnet ist, ein Durchschnittswert von Ausbreitungskonstanten der benachbarten Adern in der Gruppe mit gekoppelten Adern mit $\beta$ [m$^{-1}$] gekennzeichnet ist und ein Adermittenintervall zwischen den benachbarten Adern in der Gruppe mit gekoppelten Adern (110) mit A [m] gekennzeichnet ist,
der mehradrige Lichtwellenleiter eine Aderstruktur und eine Aderanordnung aufweist, die die folgenden ersten bis dritten Bedingungen erfüllen:

wobei die erste Bedingung so definiert ist, dass das Aderintervall A zwischen den benachbarten Adern in der Gruppe mit gekoppelten Adern (110) so eingestellt ist, dass der Modenkopplungskoeffizient $\kappa$ zwischen den benachbarten Adern bei einer Wellenlänge von 1550 nm $1{,}6 \times 10^2$ [m$^{-1}$] oder weniger beträgt;
wobei die zweite Bedingung so definiert ist, dass $\kappa/(\beta\Lambda C_{avg})$ oder $\kappa/(\beta\Lambda C_f)$ in einem Wellenlängenbereich von 1530 bis 1625 nm 0,1 oder weniger wird, wenn $C_{avg}$ auf 0,01 bis 2 [m$^{-1}$] oder 0,1 bis 1 [m$^{-1}$] eingestellt ist; und
wobei die dritte Bedingung so definiert ist, dass $\kappa$ $2{,}6 \times 10^{\circ}$ [m$^{-1}$] oder mehr wird, oder $\kappa/(\beta\Lambda C_{avg})$ oder $\kappa/(\beta\Lambda C_f)$ im Wellenlängenbereich von 1530 bis 1625 nm 0,01 oder mehr wird.

2. Mehradriger Lichtwellenleiter (100) nach Anspruch 1, wobei
ein Übertragungsverlust beim Vollmodusstart 0,20 dB/km oder weniger in einem Wellenlängenbereich von 1530 nm bis 1565 nm oder einem Wellenlängenbereich von 1460 nm bis 1625 nm beträgt,
der Modendurchschnitt einer chromatischen Dispersion 16 ps/(nm·km) oder mehr beträgt,
in allen räumlichen Moden ein Biegeverlust, wenn der mehradrige Lichtwellenleiter um eine Windung auf einen Dorn, der einen Durchmesser von 30 mm aufweist, gewickelt ist, 0,2 dB oder weniger bei einer Wellenlänge von 1550 nm beträgt,
in allen räumlichen Moden ein Biegeverlust, wenn der mehradrige Lichtwellenleiter auf einen Dorn, der einen Durchmesser von 20 mm aufweist, gewickelt ist, 20 dB/m oder weniger bei der Wellenlänge von 1550 nm beträgt,
in allen räumlichen Moden ein Biegeverlust, wenn der mehradrige Lichtwellenleiter um 100 Windungen auf einen Dorn, der einen Durchmesser von 30 mm aufweist, gewickelt ist, 0,5 dB oder weniger bei der Wellenlänge von 1550 nm beträgt,
in dem Wellenlängenbereich von 1530 nm bis 1565 nm oder dem Wellenlängenbereich von 1460 nm bis 1625 nm der Durchschnittswert eines modenabhängigen Verlusts 0,01 dB/km$^{1/2}$ oder weniger beträgt und
in dem Wellenlängenbereich von 1530 nm bis 1565 nm oder dem Wellenlängenbereich von 1460 nm bis 1625 nm ein Durchschnittswert von Maximalwerten für jeweilige Wellenlängen der differentiellen Gruppenlaufzeit zwischen räumlichen Moden 10 ps/km$^{1/2}$ oder weniger beträgt.

3. Mehradriger Lichtwellenleiter (100) nach Anspruch 1 oder 2, wobei
die gemeinsame Ummantelung (120) einschließt: eine gemeinsame optische Ummantelung, die die gesamte Vielzahl von Adern abdeckt, die die Gruppe mit gekoppelten Adern bildet (110); und eine physikalische Ummantelung, die eine Peripherie der optischen Ummantelung abdeckt,

der Außendurchmesser jedes der Vielzahl von Adern 6 bis 15 μm beträgt und
wo eine relative Brechungsindexdifferenz, die auf einem Brechungsindex von reinem Siliciumdioxid basiert, mit Δ in einem Querschnitt des mehradrigen Lichtwellenleiters orthogonal zur Längsrichtung gekennzeichnet ist, die Differenz von Δ einer durchschnittlichen Fläche von jeder der Vielzahl von Adern und Δ der optischen Ummantelung 0,2 % bis 0,5 % beträgt, Δ der physikalischen Ummantelung höher ist als Δ der optischen Ummantelung und eine Differenz von Δ der physikalischen Ummantelung und Δ der optischen Ummantelung 0,0 % bis 1 % beträgt.

4. Mehradriger Lichtwellenleiter (100) nach Anspruch 3, wobei
die Gruppe mit gekoppelten Adern (110) aus 2 bis 15 Adern gebildet ist,
der Außendurchmesser der physikalischen Ummantelung 125 ± 1 μm beträgt und wo der kürzeste Abstand der physischen Ummantelung und des Zentrums der Proximity-Ader, die der physischen Ummantelung am nächsten liegt, mit DJ gekennzeichnet ist, der Radius der Proximity-Ader mit 'a' gekennzeichnet ist, der Abstand des Zentrums der optischen Ummantelung und des Zentrums der Proximity-Ader mit $D_{offset}$ gekennzeichnet ist und $\log_{10}(D_{offset}/a)$ mit X gekennzeichnet ist,
der mehradrige Lichtwellenleiter einen der folgenden Ausdrücke erfüllt:

$$D_J/a \geq 7{,}68 \times 10^{-2} \cdot X^2 - 2{,}21 \times 10^{-1} \cdot X + 3{,}15$$

oder

$$D_J/a \geq 7{,}57 \times 10^{-2} \cdot X^2 - 2{,}25 \times 10^{-1} \cdot X + 3{,}40.$$

5. Lichtwellenleiter-Übertragungssystem (1), bei dem der mehradrige Lichtwellenleiter nach einem der Ansprüche 1 bis 4 als Übertragungsweg übernommen wird,
wobei das Lichtwellenleiter-Übertragungssystem (1) eine Struktur zur Kompensation des Übersprechens zwischen den in der Gruppe mit gekoppelten Adern (110) erzeugten räumlichen Moden durch MIMO-Signalverarbeitung aufweist.

6. Mehradriges Lichtwellenleiterkabel (300), in das eine Vielzahl von mehradrigen Lichtwellenleitern (100) eingebettet ist, wobei jede der Vielzahl von mehradrigen Lichtwellenleitern (100) die gleiche Struktur wie der mehradrige Lichtwellenleiter nach Anspruch 1 aufweist, wobei:
jede der Vielzahl von mehradrigen Lichtwellenleitern die Aderstruktur und die Aderanordnung aufweist, die eine vierte Bedingung erfüllen, die so definiert ist, dass $\kappa/(\beta \Lambda C_{avg})$ oder $\kappa/(\beta \Lambda C_f)$ in einem Wellenlängenbereich von 1530 bis 1625 nm 0,1 oder weniger wird.

7. Mehradriges Lichtwellenleiterkabel nach Anspruch 6, wobei
die Aderstruktur und die Aderanordnung in jeder der Vielzahl von mehradrigen Lichtwellenleitern so eingestellt sind, dass $\kappa/(\beta \Lambda C_{avg})$ oder $\kappa/(\beta \Lambda C_f)$ im Wellenlängenbereich von 1530 bis 1625 nm 0,01 oder mehr wird.

8. Mehradriges Lichtwellenleiterkabel nach Anspruch 6 oder 7, wobei
$C_{avg}$ 0,01 bis 2 [m$^{-1}$] in einem Zustand beträgt, in dem das mehradrige Lichtwellenleiterkabel nicht gebogen ist.

9. Mehradriges Lichtwellenleiterkabel nach einem der Ansprüche 6 bis 8, wobei
$C_{avg}$ 0,1 [m$^{-1}$] bis 1 [m$^{-1}$] in einem Zustand beträgt, in dem das mehradrige Lichtwellenleiterkabel nicht gebogen ist.

10. Mehradriges Lichtwellenleiterkabel nach einem der Ansprüche 6 bis 9, wobei
in jedem der Vielzahl von mehradrigen Lichtwellenleitern ein Übertragungsverlust beim Vollmodusstart 0,20 dB/km oder weniger in einem Wellenlängenbereich von 1530 nm bis 1565 nm oder einem Wellenlängenbereich von 1460 nm bis 1625 nm beträgt,
der Modendurchschnitt einer chromatischen Dispersion 16 ps/(nm·km) oder mehr beträgt,
in allen räumlichen Moden ein Biegeverlust, wenn der mehradrige Lichtwellenleiter um eine Windung auf einen Dorn, der einen Durchmesser von 30 mm aufweist, gewickelt ist, 0,2 dB oder weniger bei einer Wellenlänge von 1550 nm beträgt,
in allen räumlichen Moden ein Biegeverlust, wenn der mehradrige Lichtwellenleiter auf einen Dorn, der einen Durchmesser von 20 mm aufweist, gewickelt ist, 20 dB/m oder weniger bei der Wellenlänge von 1550 nm beträgt,

in allen räumlichen Moden ein Biegeverlust, wenn der mehradrige Lichtwellenleiter um 100 Windungen auf einen Dorn, der einen Durchmesser von 30 mm aufweist, gewickelt ist, 0,5 dB oder weniger bei der Wellenlänge von 1550 nm beträgt,

in dem Wellenlängenbereich von 1530 nm bis 1565 nm oder dem Wellenlängenbereich von 1460 nm bis 1625 nm der Durchschnittswert eines modenabhängigen Verlusts 0,01 dB/km$^{1/2}$ oder weniger beträgt,

in dem Wellenlängenbereich von 1530 nm bis 1565 nm oder dem Wellenlängenbereich von 1460 nm bis 1625 nm der Durchschnittswert einer räumlichen Modendispersion 10 ps/km$^{1/2}$ oder weniger beträgt.

**11.** Lichtwellenleiter-Übertragungssystem (1), bei dem der mehradrige Lichtwellenleiter nach einem der Ansprüche 6 bis 10 als Übertragungsweg übernommen wird,

wobei das Lichtwellenleiter-Übertragungssystem (1) eine Struktur zur Kompensation des Übersprechens zwischen den in der Gruppe mit gekoppelten Adern (110) erzeugten räumlichen Moden durch MIMO-Signalverarbeitung aufweist.

**Revendications**

**1.** Fibre optique à âmes multiples (100) comprenant :

au moins un groupe d'âmes couplées (110) constitué d'une pluralité d'âmes ; et
une gaine commune (120) entourant le groupe d'âmes couplées (110),
dans laquelle, où une valeur moyenne d'une courbure de la fibre optique à âmes multiples dans un état dans lequel la fibre optique à âmes multiples est intégrée dans un câble, le long d'une direction longitudinale de la fibre optique à âmes multiples, est désignée par $C_{avg}$ [m$^{-1}$], une courbure virtuelle de la fibre optique à âmes multiples dans un état linéaire est désignée par $C_f$ [m$^{-1}$], un coefficient de couplage de mode entre des âmes adjacentes parmi la pluralité d'âmes constituant le groupe d'âmes couplées est désigné par $\kappa$ [m$^{-1}$], une valeur moyenne de constantes de propagation des âmes adjacentes dans le groupe d'âmes couplées est désignée par $\beta$ [m$^{-1}$], et un intervalle central d'âme entre les âmes adjacentes dans le groupe d'âmes couplées (110) est désigné par $\Lambda$ [m],
la fibre optique à âmes multiples présente une structure d'âme et un agencement d'âme satisfaisant les première à troisième conditions suivantes :

la première condition définie de sorte que l'intervalle d'âmes $\Lambda$ entre les âmes adjacentes dans le groupe d'âmes couplées (110) est réglé de sorte que le coefficient de couplage de mode $\kappa$ entre les âmes adjacentes à une longueur d'onde de 1550 nm est 1,6 x 10$^2$ [m$^{-1}$] ou moins ;
la deuxième condition définie de sorte que $\kappa/(\beta\Lambda C_{avg})$ ou $\kappa/(\beta\Lambda C_f)$ devient 0,1 ou moins dans une plage de longueur d'onde de 1530 à 1625 nm lorsque $C_{avg}$ est réglé à 0,01 à 2 [m$^{-1}$] ou 0,1 à 1 [m$^{-1}$] ; et
la troisième condition définie de sorte que $\kappa$ devient 2,6 x 10$^0$ [m$^{-1}$] ou plus, ou, $\kappa/(\beta\Lambda C_{avg})$ ou $\kappa/(\beta\Lambda C_f)$ devient 0,01 ou plus dans la plage de longueur d'onde de 1530 à 1625 nm.

**2.** Fibre optique à âmes multiples (100) selon la revendication 1, dans laquelle
une perte de transmission en lancement en mode complet est de 0,20 dB/km ou moins dans une plage de longueur d'onde de 1 530 nm à 1 565 nm ou une plage de longueur d'onde de 1460 nm à 1 625 nm,
la moyenne de mode d'une dispersion chromatique est de 16 ps/(nm·km) ou plus,
dans tous les modes spatiaux, une perte de courbure lorsque la fibre optique à âmes multiples est enroulée sur un mandrin présentant un diamètre de 30 mm sur un tour est de 0,2 dB ou moins à une longueur d'onde de 1550 nm,
dans tous les modes spatiaux, une perte de courbure lorsque la fibre optique à âmes multiples est enroulée sur un mandrin présentant un diamètre de 20 mm est de 20 dB ou moins à la longueur d'onde de 1 550 nm,
dans tous les modes spatiaux, une perte de courbure lorsque la fibre optique à âmes multiples est enroulée sur un mandrin présentant un rayon de 30 mm sur 100 tours est de 0,5 dB ou moins à la longueur d'onde de 1550 nm,
dans la plage de longueur d'onde de 1530 nm à 1565 nm ou la plage de longueur d'onde de 1460 nm à 1 625 nm, la valeur moyenne d'une perte dépendant du mode est de 0,01 dB/km$^{1/2}$ ou moins, et
dans la plage de longueur d'onde de 1530 nm à 1565 nm ou la plage de longueur d'onde de 1460 nm à 1 625 nm, une valeur moyenne des valeurs maximales pour des longueurs d'onde respectives du retard différentiel de groupe entre les modes spatiaux est de 10 ps/km$^{1/2}$ ou moins.

**3.** Fibre optique à âmes multiples (100) selon la revendication 1 ou 2, dans laquelle
la gaine commune (120) inclut : une gaine optique commune qui recouvre l'ensemble de la pluralité d'âmes cons-

EP 3 361 296 B1

tituant le groupe d'âmes couplées (110) ; et une gaine physique qui recouvre une périphérie de la gaine optique, le diamètre extérieur de chacune de la pluralité d'âmes est de 6 à 15 $\mu$m, et
où une différence d'indice de réfraction relative basée sur un indice de réfraction de silice pure est désignée par $\Delta$ dans une section transversale de la fibre optique à âmes multiples orthogonale à la direction longitudinale, la différence entre $\Delta$ d'une zone moyenne de chacune de la pluralité d'âmes et $\Delta$ de la gaine optique est de 0,2 % à 0,5 %, $\Delta$ de la gaine physique est supérieur à $\Delta$ de la gaine optique, et une différence entre $\Delta$ de la gaine physique et $\Delta$ de la gaine optique est de 0,0 % à 1 %.

4. Fibre optique à âmes multiples (100) selon la revendication 3, dans laquelle le groupe d'âmes couplées (110) est constitué de 2 à 15 âmes,
le diamètre extérieur de la gaine physique est de 125 $\pm$ 1 $\mu$m, et
où la distance la plus courte de la gaine physique et le centre de l'âme à proximité la plus proche de la gaine physique est désignée par D$_J$, le rayon de l'âme à proximité est désigné par a, la distance entre le centre de la gaine optique et le centre de l'âme à proximité est désignée par D$_{offset}$, et $\log_{10}(D_{offset}/a)$ est désigné par X,
la fibre optique à âmes multiples satisfait à une des expressions suivantes :

$$D_J/a \geq 7,68 \times 10^{-2} X^2 - 2,21 \times 10^{-1} X + 3,15 ;$$

ou

$$D_J/a \geq 7,57 \times 10^{-2} X^2 - 2,25 \times 10^{-1} X + 3,40.$$

5. Système de transmission par fibres optiques (1) dans lequel la fibre optique à âmes multiples selon l'une quelconque des revendications 1 à 4 est appliquée en tant que trajet de transmission,
dans lequel le système de transmission par fibres optiques (1) présente une structure pour compenser par le traitement par signal MIMO pour diaphonie entre les modes spatiaux générés dans le groupe d'âmes couplées (110).

6. Câble à fibre optique à âmes multiples (300) dans lequel une pluralité de fibres optiques à âmes multiples (100) sont intégrées, chacune de la pluralité de fibres optiques à âmes multiples (100) présentant la même structure que la fibre optique à âmes multiples définie dans la revendication 1, dans lequel :
chacune de la pluralité de fibres optiques à âmes multiples présente la structure d'âme et l'agencement d'âme satisfaisant à une quatrième condition définie de sorte que $\kappa/(\beta\Lambda C_{avg})$ ou $\kappa/(\beta\Lambda C_f)$ devient 0,01 ou moins dans une plage de longueur d'onde de 1 530 à 1625 nm.

7. Câble à fibre optique à âmes multiples selon la revendication 6, dans lequel
la structure d'âme et l'agencement d'âme dans chacune de la pluralité de fibres optiques à âmes multiples sont ajustés de sorte que $\kappa/(\beta\Lambda C_{avg})$ ou $\kappa/(\beta\Lambda C_f)$ devient 0,01 ou plus dans la plage de longueur d'onde de 1530 à 1 625 nm.

8. Câble à fibre optique à âmes multiples selon la revendication 6 ou 7, dans lequel
C$_{avg}$ est 0,01 à 2 [m$^{-1}$], dans un état dans lequel le câble à fibre optique à âmes multiples n'est pas courbé.

9. Câble à fibre optique à âmes multiples selon l'une quelconque des revendications 6 à 8, dans lequel
C$_{avg}$ est 0,1 [m$^{-1}$] à 1 [m$^{-1}$], dans un état dans lequel le câble à fibre optique à âmes multiples n'est pas courbé.

10. Câble à fibre optique à âmes multiples selon l'une quelconque des revendications 6 à 9, dans lequel
dans chacune de la pluralité de fibres optiques à âmes multiples, une perte de transmission dans un lancement en mode complet est de 0,20 dB/km ou moins dans une plage de longueur d'onde de 1530 nm à 1 565 nm ou une plage de longueur d'onde de 1 460 nm à 1625 nm,
la moyenne de mode d'une dispersion chromatique est de 16 ps/(nm-km) ou plus,
dans tous les modes spatiaux, une perte de courbure lorsque la fibre optique à âmes multiples est enroulée sur un mandrin présentant un diamètre de 30 mm sur un tour est de 0,2 dB ou moins à une longueur d'onde de 1550 nm,
dans tous les modes spatiaux, une perte de courbure lorsque la fibre optique à âmes multiples est enroulée sur un mandrin présentant un diamètre de 20 mm est de 20 dB/m ou moins à la longueur d'onde de 1 550 nm,
dans tous les modes spatiaux, une perte de courbure lorsque la fibre optique à âmes multiples est enroulée sur un mandrin présentant un rayon de 30 mm sur 100 tours est de 0,5 dB ou moins à la longueur d'onde de 1550 nm,

dans la plage de longueur d'onde de 1530 nm à 1 565 nm ou la plage de longueur d'onde de 1460 nm à 1 625 nm, la valeur moyenne d'une perte dépendant du mode est de 0,01 dB/km$^{1/2}$ ou moins, et

dans la plage de longueur d'onde de 1530 nm à 1565 nm ou la plage de longueur d'onde de 1460 nm à 1 625 nm, la valeur moyenne d'une dispersion de mode spatial est de 10 ps/km$^{1/2}$ ou moins.

11. Système de transmission de fibre optique (1) dans lequel le câble à fibre optique à âmes multiples selon l'une quelconque des revendications 6 à 10 est appliqué en tant que trajet de transmission,

dans lequel le système de transmission par fibres optiques (1) présente une structure pour compenser par le traitement par signal MIMO pour diaphonie entre les modes spatiaux générés dans le groupe d'âmes couplées (110).

# Fig.1

# Fig.2A

# Fig.2B

# Fig.3

| TYPE | REFRACTIVE INDEX PROFILE |
|------|--------------------------|
| a | |
| b | |
| c | |
| d | |
| e | |
| f | |
| g | |

## Fig.4A

Fig.4B

# Fig.5A

## Fig.5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. FAN ; J. M. KAHN.** Principal modes in multimode waveguides. *Opt. Lett.,* 2005, vol. 30 (2), 135-137
- **M. KOSHIBA ; K. SAITOH ; K. TAKENAGA ; S. MATSUO.** Analytical expression of average power-coupling coefficients for estimating intercore crosstalk in multicore fibers. *IEEE Photon. J,* 2012, vol. 4 (5), 1987-1995
- **T. HAYASHI ; T. SASAKI ; E. SASAOKA ; K. SAITOH ; M. KOSHIBA.** Physical interpretation of intercore crosstalk in multicore fiber: effects of macrobend, structure fluctuation, and microbend. *Opt. Express,* 2013, vol. 21 (5), 5401-5412
- **RYF R et al.** 1705-km transmission over coupled-core fibre supporting 6 spatial modes. *2014 THE EUROPEAN CONFERENCE ON OPTICAL COMMUNICATION (ECOC), SYSTEMATIC PARIS REGION SYSTEMS AND ICT CLUSTER,* 21 September 2014, 1-3
- **CRISTIAN ANTONELLI et al.** The delay spread in fibers for SDM transmission: dependence on fiber parameters and perturbations. *Optics Express,* 28 January 2015, vol. 23 (3), 2196-2202